Europäisches Patentamt

European Patent Office

Office européen des brevets

(11) Numéro de publication: **0 320 843 B1**

(12) **FASCICULE DE BREVET EUROPEEN**

(45) Date de publication de fascicule du brevet: **08.07.92**  (51) Int. Cl.5: **H04L 1/00**, H04L 25/49

(21) Numéro de dépôt: **88120712.0**

(22) Date de dépôt: **12.12.88**

(54) **Procédé et dispositif de transmission d'une voie numerique de service par l'intermédiaire du canal de parité d'un train numérique transmis en code à contrôle de parité.**

(30) Priorité: **17.12.87 FR 8717644**

(43) Date de publication de la demande:
**21.06.89 Bulletin 89/25**

(45) Mention de la délivrance du brevet:
**08.07.92 Bulletin 92/28**

(84) Etats contractants désignés:
**BE DE FR GB IT NL SE**

(56) Documents cités:
**EP-A- 0 162 442**
**WO-A-85/00945**

**JOURNAL OF LIGHTWAVE TECHNOLOGY, vol. LT-2, no. 6, décembre 1984, pages 991-997, IEEE, New York, US; C.D. ANDERSON et al.: "The SL supervisory system"**

**IEEE JOURNAL ON SELECTED AREAS IN COMMUNICATIONS, vol. SAC-2, no. 6, novembre 1984, pages 1042-1046, IEEE, New York, US; J.L. FROMME et al.: "Terminal transmission equipment (TTE) for the SL undersea lightwave system"**

(73) Titulaire: **ALCATEL CIT**
**12 Rue de la Baume**
**F-75008 Paris(FR)**

(72) Inventeur: **Abaziou, Jean-Luc**
**Guérardur**
**F-22560 Pleumeur Bodou(FR)**
Inventeur: **Billy, Jean-Claude**
**Prat Cottel**
**F-22700 Saint Ouay Perros(FR)**
Inventeur: **Le Mouel, Bernard**
**Gouzabas**
**F-22700 Saint Ouay Perros(FR)**

(74) Mandataire: **Weinmiller, Jürgen et al**
**Lennéstrasse 9 Postfach 24**
**W-8133 Feldafing(DE)**

## Description

La présente invention est relative aux transmissions synchrones de données acheminant un train numérique à haut débit transmis en code à contrôle de parité, c'est-à-dire maintenant constante la parité des états d'un type spécifié des données du train numérique transmis grâce à des mots de parité apparaissant dans le train numérique à des instants spécifiques séparés par une durée constante ou variable. Elle concerne plus particulièrement la transmission d'un train numérique à bas débit d'une voie de service par l'intermédiaire du canal constitué par les mots de parité.

Les codes à contrôle de parité introduisent dans le signal en ligne une loi de parité dont les violations, en cas d'erreurs en ligne, se prêtent à une détection analogique telle que, par exemple, celle décrite dans le brevet américain US-A-4.121.195 qui consiste à détecter les variations qu'elles provoquent à long terme dans la composante continue du signal de sortie d'un circuit bistable basculant à chacun des états dudit type spécifié des données du train numérique transmis.

Il est déjà connu d'acheminer un train numérique à bas débit, pour une voie de service, par l'intermédiaire du canal de parité d'un train numérique transmis en code à contrôle de parité soit, comme décrit dans le brevet américain US-A-4.387.460 en modulant une porteuse transmise par des modifications de mots de parité isolés régulièrement espacés entraînant un viol périodique de la loi de parité à une fréquence faible par rapport à la fréquence d'apparition des mots de parité, soit comme décrit dans le brevet américain US-A-4.633.464 en utilisant les emplacements de mots de parité isolés régulièrement espacés pour transmettre une suréchantillonnage des données du train numérique à bas débit de la voie de service. L'une et l'autre méthodes ont l'inconvénient de troubler la détection analogique des erreurs en ligne qui est très sensible aux viols isolés de la loi de parité.

La présente invention a pour but d'éviter cet inconvénient et de permettre la détection analogique d'erreurs en ligne pendant la transmission d'un train numérique à bas débit d'une voie de service par l'intermédiaire du canal de parité d'un train numérique à haut débit transmis en code à contrôle de parité.

Elle a pour objet un procédé de transmission d'une voie numérique de service par l'intermédiaire du canal de parité d'un train numérique transmis en code à contrôle de parité, avec des mots de parité intercalés à des instants spécifiques, au moyen de modifications de certains mots de parité violant la loi de parité du code à contrôle de parité, selon lequel lesdites modifications sont effectuées sur des groupes, espacés entre eux, de mots de parité consécutifs en nombres pairs et provoquent dans le train numérique transmis en code à contrôle de parité, des paquets de viols consécutifs de la loi de parité qui ne troublent pas la détection analogique d'erreurs en ligne car ils ne changent pas l'état dans lequel se retrouve le circuit bistable aux instants d'apparition des mots de parité non modifiés.

Elle a également pour objet un dispositif pour la mise en oeuvre du procédé précité.

D'autres caractéristiques et avantages de l'invention ressortiront de la description ci-après d'un mode de réalisation donné à titre d'exemple dans le cadre d'une liaison numérique mettant en oeuvre un code à contrôle de parité du type MB1P1C. Cette description sera faite en regard du dessin dans lequel :

- La figure 1 représente schématiquement un circuit d'insertion d'une voie numérique de service montré dans l'environnement des éléments d'un codeur MB1P1C,
- La figure 2 représente un schéma détaillant un calculateur de parité et de somme numérique de mot appartenant au codeur de la figure 1,
- La figure 3 représente un schéma détaillant un calculateur de somme numérique courante et un circuit d'inversion apparaissant dans les éléments du codeur de la figure 1,
- La figure 4 représente un schéma d'un circuit de mise en forme de voie numérique de service appartenant au circuit d'insertion de voie numérique de service illustré à la figure 1,
- La figure 5 représente un schéma d'un circuit de détection analogique d'erreurs en ligne mettant à contribution les propriétés statistiques d'un code à contrôle de parité,
- La figure 6 représente schématiquement un circuit d'extraction de voie numérique de service transmise par le canal de parité, illustré dans l'environnement des éléments d'un décodeur MB1C1P,
- La figure 7 représente un schéma détaillant une base de temps et un circuit de récupération de synchronisation mot faisant partie des éléments du décodeur de la figure 6 et
- La figure 8 représente le schéma détaillant la constitution du circuit d'extraction du train numérique à bas débit apparaissant dans la figure 6.

L'exemple de réalisation qui va être décrit concerne l'insertion d'un train de données binaires Té à bas débit dans le canal de parité d'un train de données binaires Te à haut débit Fe transmis en code MB1P1C connu, ainsi que les codeur et décodeur pour sa mise en oeuvre, par la demande de brevet français FR-A-2.570.905.

Le code MB1P1C est un codage par blocs selon lequel les données à transmettre sont codées par des mots de code successifs formés chacun d'un bloc de M bits de données complété par un bit de trame et par un bit d'inversion signalant si le bloc et son bit de trame ont été inversés pour maintenir la somme numérique courante bornée, le bit de trame étant constitué d'un bit de parité permettant également de retrouver la découpe mot. Dans l'exemple décrit ci-après, M est choisi égal à 12, le bit d'inversion est par convention au niveau logique 1 lorsqu'il y a eu inversion et le bit de trame a une valeur logique telle que le mot de code de 14 bits obtenu ait une parité paire.

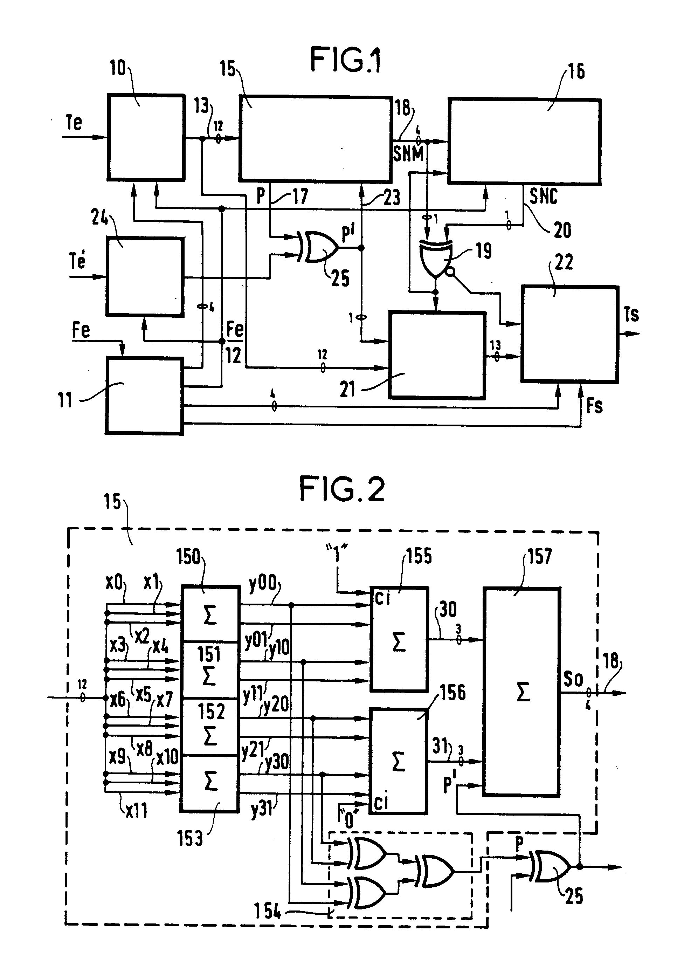

La figure 1 représente les éléments d'un codeur 12B1P1C auxquels ont été associés les éléments d'un circuit d'insertion dans le canal de parité des données binaires d'une voie numérique de service ayant un débit égal au seizième de celui des mots de code.

Le codeur 12B1P1C qui reçoit en entrée le train de données binaires isochrones Te à haut débit Fe et délivre en sortie un train de données binaires Ts de débit de sortie Fs supérieur de 14/12 ème au débit d'entrée Fe comporte :

- une base de temps 11 synchronisée par le débit Fe du train numérique incident délivrant différents signaux d'horloge,
- un démultiplexeur 10 placé en entrée mettant, sous la commande de la base de temps 11, le train binaire incident Te sous forme de blocs successifs de 12 bits parallèles,
- un premier circuit logique de calcul 15 avec une entrée principale 13 recevant les blocs successifs de 12 bits issus du démultiplexeur 10 et une entrée auxiliaire 23 recevant une valeur p' du bit de parité modifiée pour transmettre le train numérique à bas débit, qui calcule à la fois la valeur normale p du bit de parité associé à chaque bloc de 12 bits disponible sur une sortie 17 et la valeur d'une somme numérique avec signe SNM disponible sur une sortie 18, correspondant au mot binaire constitué du bloc de 12 bits délivré par le démultiplexeur 10 complété par un bit ayant la valeur modifiée p' du bit de parité et par un bit d'inversion C prépositionné au niveau logique 0 choisi pour signaler un bloc non inversé.
- un deuxième circuit logique de calcul 16 qui reçoit en entrée la somme numérique de mot SNM délivrée par le premier circuit logique de calcul 15, le signal de sortie d'un circuit de décision d'inversion 19 et le cadencement à Fe/12 de succession des blocs de 12 bits en sortie du démultiplexeur 10, et qui délivre en sortie 20 le signe de la somme numérique courante SNC du train de données binaires Ts engendré par le codeur,
- le circuit de décision d'inversion 19 constitué d'une porte logique de type "ou exclusif" à sorties complémentée et non complémentée comparant le signe de la somme numérique de mot avec celui de la somme numérique courante SNC,
- un circuit d'inversion 21 opérant sous la commande du circuit de décision d'inversion 19 sur le bloc de 12 bits disponible en sortie du démultiplexeur 10 et sur la valeur modifiée p' du bit de parité et
- un circuit multiplexeur 22 qui reçoit le mot de 13 bits délivré par le circuit d'inversion et le signal de sortie complémentée du circuit de décision d'inversion 19 constituant le bit d'inversion, qui dégage les fenêtres temporelles nécessaires à l'insertion du bit d'inversion C et du bit de parité P et délivre le train numérique isochrone de données codées Ts sous le contrôle de la base de temps 11.

Le circuit d'insertion de données binaires Té de voie numérique de service dans le canal de parité du train binaire codé Ts intervient dans les éléments du codeur au niveau du premier circuit logique de calcul 15 et du circuit d'inversion 21 par l'intermédiaire d'un modulateur constitué par une porte logique de type " ou exclusif" 25 à deux entrées délivrant à ces deux circuits la valeur modifiée p' du bit de parité sous le contrôle de la sortie 17 du premier circuit logique de calcul 15 fournissant la valeur réelle p du bit de parité et d'un circuit de mise en forme 24 qui, sous la commande de la base de temps 11, échantillonne les données binaires Té de la voie de service tous les seize mots de code et délivre ou non, en fonction de cet échantillonnage une impulsion ayant la largeur de deux mots de code.

La figure 2 détaille la constitution du premier circuit logique de calcul 15 du codeur au niveau duquel intervient le modulateur 25 du circuit d'insertion des données binaires Té de la voie numérique de service. Celui-ci se compose de plusieurs additionneurs binaires en cascade. Un premier groupe de quatre additionneurs binaires complets 150, 151, 152, 153 de trois nombres binaires de un bit reçoit sur ses entrées les 12 bits parallèles délivrés par le démultiplexeur 10. Un additionneur incomplet 154 de quatre nombres binaires de un bit ne délivrant que le bit de plus faible poids du résultat de l'addition a ses entrées connectées aux sorties des bits de plus faible poids des quatre additionneurs du premier groupe d'additionneurs et fournit en sortie le valeur normale du bit de parité. Un deuxième groupe de deux additionneurs complets 155, 156 de deux nombres binaires de deux bits additionnent deux à deux les nombres délivrés par le premier groupe d'additionneurs en présence d'une retenue d'ordre 0 matérialisée pour l'un 155 par un niveau logique 1 sur son entrée de retenue $C_i$ et pour l'autre 156 par un niveau logique 0 sur son entrée de retenue $C_i$. Un dernier additionneur complet 157 de deux nombres binaires de quatre bits additionne les nombres délivrés par le deuxième groupe d'additionneurs 155, 156 en présence d'une retenue d'ordre 0 constituée de la valeur modifiée $p'$ du bit de parité issue du modulateur 25 du circuit d'insertion de données binaires Té de voie numérique de service.

La parité du bloc de 12 bits disponible en sortie du démultiplexeur 10 est celle du nombre de uns qu'il contient. En binaire, elle correspond à la valeur du bit de plus faible poids de la sommation des douze bits du blocs considérés comme 12 nombres binaires indépendants de un bit. Cette sommation est faite en deux étapes, l'une au cours de laquelle le premier groupe d'additionneurs 150, 151, 152, 153 effectue quatre sommes partielles $y_0$, $y_1$, $y_2$, $y_3$ trois à trois de ces 12 bits et l'autre au cours de laquelle l'additionneur incomplet 154 calcule la valeur du bit de plus faible poids de la somme des bits de plus faible poids $y_{00}$, $y_{10}$, $y_{20}$, $y_{30}$ des quatre sommes partielles.

L'additionneur incomplet 154 peut être constitué, comme représenté, par une cascade de trois portes logiques de type "ou exclusif" à deux entrées. Il délivre la valeur $p$ du bit de parité, au niveau logique 1 ou 0 selon que le bloc 12 bits est impair ou pair.

Le mot constitué du bloc de 12 bits délivré par le démultiplexeur 10 et la valeur normale $p$ de son bit de parité $P$ a une parité paire constante. Le mot de 14 bits constitué du bloc de 12 bits délivré par le démultiplexeur 10, de la valeur $p$ du bit de parité et du bit d'inversion $C$ prépositionné à un niveau logique prédéterminé choisi ici égal à zéro a une parité paire constante.

Cette propriété de parité est conservée dans une inversion en raison du nombre pair de bits.

La somme numérique de mot SNM, avant une éventuelle inversion, est proportionnelle à la différence entre le nombre de uns et de zéros dans le mot formé du bloc de 12 bits disponible en sortie du démultiplexeur 10, de la valeur modifiée $p'$ de son bit de parité et de son bit d'inversion $C$.

Soit $\alpha$ le nombre de uns, le nombre de zéros sera :
$14 - \alpha$
et la somme numérique de mot SNM s'exprime par :

$$SNM = k[\alpha - (14 - \alpha)]$$
$$= 2k(\alpha - 7)$$

$k$ étant un coefficient de proportionnalité arbitraire.

Soit $x_0, ... x_{11}$ les 12 bits disponibles en parallèle à la sortie du démultiplexeur 10, le nombre $\alpha$ s'exprime par la relation :

$$\alpha = \sum_{i=0}^{11} x_i + C + p'$$

Soit $y_0, ...., y_3$ les sommes partielles effectuées par le premier groupe d'additionneurs 150, 151, 152, 153 respectivement :

$$y_0 = x_0 + x_1 + x_2$$
$$y_1 = x_3 + x_4 + x_5$$
$$y_2 = x_6 + x_7 + x_8$$
$$y_3 = x_9 + x_{10} + x_{11}$$

le nombre $\alpha$ s'exprime en fonction des sommes partielles délivrées par le premier groupe d'additionneurs par la relation :

$$\alpha = y_0 + y_1 + y_2 + y_3 + C + p'$$

Soit $z_0$, $Z_1$ les sommes partielles effectuées par le deuxième groupe d'additionneurs 155, 156 dont les entrées de retenue sont aux niveaux logiques 1 et 0 respectivement,

$$z_0 = y_0 + y_1 + 1$$
$$z_1 = y_2 + y_3 + 0$$

Le nombre $\alpha$ s'exprime en fonction des sommes partielles délivrées par le deuxième groupe d'additionneurs par la relation :

$$\alpha = z_0 + z_1 + C + p' - 1$$

Soit $S_0$ la somme effectuée par le dernier additionneur 157 dont l'entrée de retenue reçoit la valeur $p'$ du bit de parite :

$$S_0 = z_0 + z_1 + p'$$

le nombre $\alpha$ s'exprime en fonction de $S_0$ par la relation :

$$\alpha = S_0 + C - 1$$

et par conséquent, la somme numérique de mot par :

$$SNM = 2k(S_0 + C - 8)$$

En admettant, ce qui est le cas, que le bit d'inversion $C$ est au niveau logique 0 lorsqu'il est ajouté au bloc de 12 bits délivré par le démultiplexeur 10 et à la valeur modifiée p' de son bit de parité, la somme numérique de mot SNM s'exprime en fonction du nombre $S_0$ délivré en sortie de l'additionneur 157 par la relation :

$$SNM = 2 k (S_0 - 8)$$

La constante k peut être prise égale à 1/2 pour simplifier. La somme $S_0$ délivrée par l'additionneur 157, égale à la somme des 15 bits du mot formé par le bloc de 12 bits délivrés par le démultiplexeur 10, de la valeur modifiée p' de son bit de parité et des deux bits de retenue s'exprime sur quatre bits. La valeur de la somme numérique de mot SNM s'obtient en soustrayant la valeur 8 à la somme $S_0$. Dans une arithmétique binaire à quatre chiffres en complément à deux, cette soustraction se fait en ajoutant 1000 de sorte que l'on peut considérer que la somme $S_0$ représente, dans cette arithmétique, la somme numérique de mot affectée d'un signe négatif. Il n'est pas nécessaire de se soucier du signe négatif qui peut être pris en compte dans la constante k prise alors égale à $-\frac{1}{2}$.

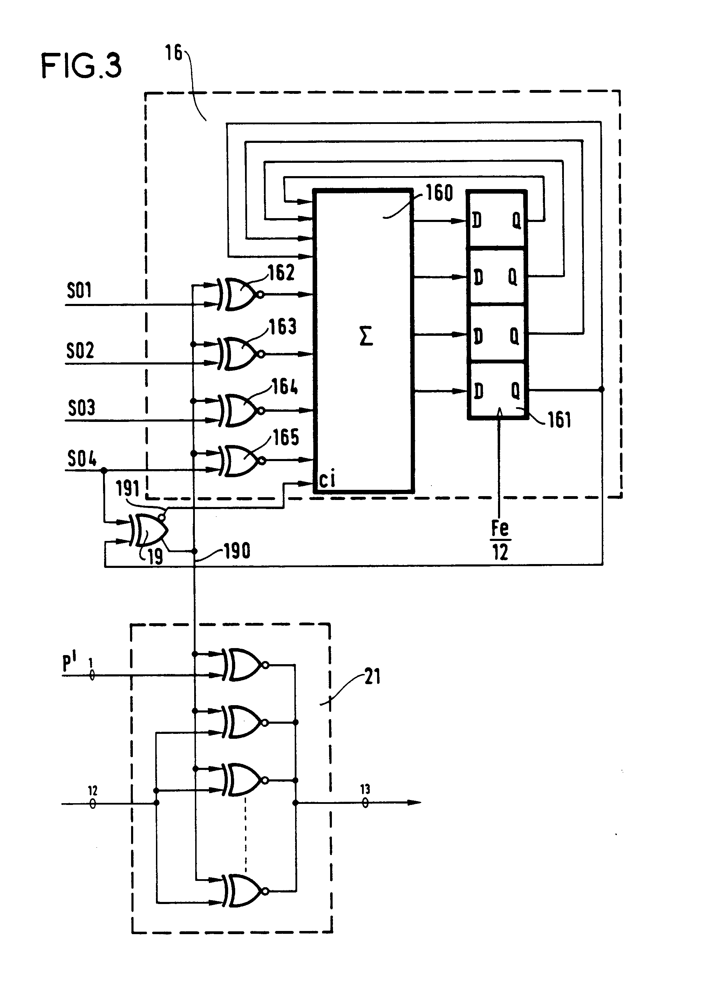

La figure 3 détaille le deuxième circuit logique de calcul 16 du codeur. Celui-ci a été conçu en tenant compte du fait que la somme numérique de mot lui est délivrée dans une arithmétique binaire à quatre chiffres en complément à deux. Il comporte un additionneur binaire complet 160 de deux nombres binaires de quatre bits ayant sa sortie rebouclée à une entrée par l'intermédiaire de registres parallèles 161 chargés au rythme Fe/12 de l'apparition des blocs de 12 bits en sortie du démultiplexeur 10 grâce à un signal d'horloge provenant de la base de temps 11. L'entrée restante de l'additionneur 160 est reliée à la sortie du premier circuit logique de calcul fournissant la somme $S_0$ par l'intermédiaire d'un multiplicateur de signes commandé par le circuit de décision d'inversion 19 et constitué d'une batterie de quatre portes logiques de type "non ou exclusif" 162, 163, 164, 165. Ce multiplicateur de signes réalise ou non, sur ordre du circuit de décision 19, une complémentation à un de la somme $S_0$ délivrée par le premier circuit logique de calcul. A chaque complémentation à un de la somme $S_0$, un niveau logique 1 est appliqué à l'entrée de retenue de l'additionneur pour la transformer en complémentation à deux et réaliser ainsi l'inversion de signe.

On remarque que l'on peut reboucler l'additionneur 160 sur lui-même en raison du principe de codage choisi qui fait qu'une somme numérique courante SNC initialisée à zéro reste dans la plage de variation de la somme numérique de mot SNM.

La figure 3 représente également la porte logique de type "ou exclusif" à deux entrées du circuit de décision d'inversion 19 qui comporte une sortie normale 190 et une sortie inversée 191. L'une des entrées de cette porte logique est connectée au bit de signe $S_{04}$ (bit de plus fort poids) de la somme $S_0$ délivrée par le premier circuit logique de calcul 15 tandis que l'autre est connectée en sortie des registres parallèles 161 sur celui affecté au bit de plus fort poids de la sortie de l'additionneur 160. La sortie normale 190 délivre le signal de commande d'inversion C qui commande les portes logiques de type "non ou exclusif" 162, 163, 164, 165 effectuant la complémentation à un de la somme $S_0$ tandis que la sortie complémentée 191 est connectée à l'entrée de retenue de l'additionneur 160.

Lorsque la somme numérique de mot SNM est de même signe que la somme numérique courante SNC et qu'il faut effectuer une inversion du bloc de 12 bits délivré par le démultiplexeur 10 et de la valeur modifiée p' de son bit de parité, la porte logique "ou exclusif" 19 reçoit les mêmes niveaux logiques sur ses deux entrées. Elle délivre alors sur sa sortie normale 190 un niveau logique 0 donnant aux portes logiques 162, 163, 164 et 165 une fonction inverseuse vis-à-vis de la somme $S_0$ - (complément à 1) et sur sa sortie complémentée 191 un niveau logique 1 appliqué à l'entrée de retenue de l'additionneur 160 transformant le complément à 1 de la somme $S_0$ en un complément à 2 et commandant ainsi une opération de soustraction. Lorsque la somme numérique de mot SNM est de signe opposé à celui de la somme numérique courante SNC et qu'il ne faut pas inverser le bloc de 12 bits délivré par le démultiplexeur 10 et la valeur modifiée p' de son bit de parité P, la porte logique "ou exclusif" 19 reçoit des niveaux logiques différents sur ses deux entrées. Elle délivre alors un niveau logique 1 sur sa sortie normale rendant les portes logiques 162, 163, 164 et 165 transparentes vis-à-vis de la somme $S_0$ et un niveau logique 0 sur sa sortie complémentée 191 commandant ainsi une opération d'addition.

La figure 3 montre aussi le circuit d'inversion 21 qui est constitué d'une batterie de treize portes logiques de type "non ou exclusif" à deux entrées connectées chacune par une entrée à la sortie 190 de la porte logique constituant le circuit de décision d'inversion 19 et recevant respectivement sur les autres entrées douze bits du bloc délivré par le démultiplexeur 10 et la valeur modifiée p' de son bit de parité délivrée par le premier circuit logique de calcul 15. Vis-à-vis du bloc de 12 bits délivré par le démultiplexeur 10 et de la valeur modifiée p' de son bit de parité, cette batterie de treize portes logiques se comporte en circuit inverseur ou transparent selon qu'elle reçoit du circuit de décision d'inversion 19 un niveau logique 0 ou 1.

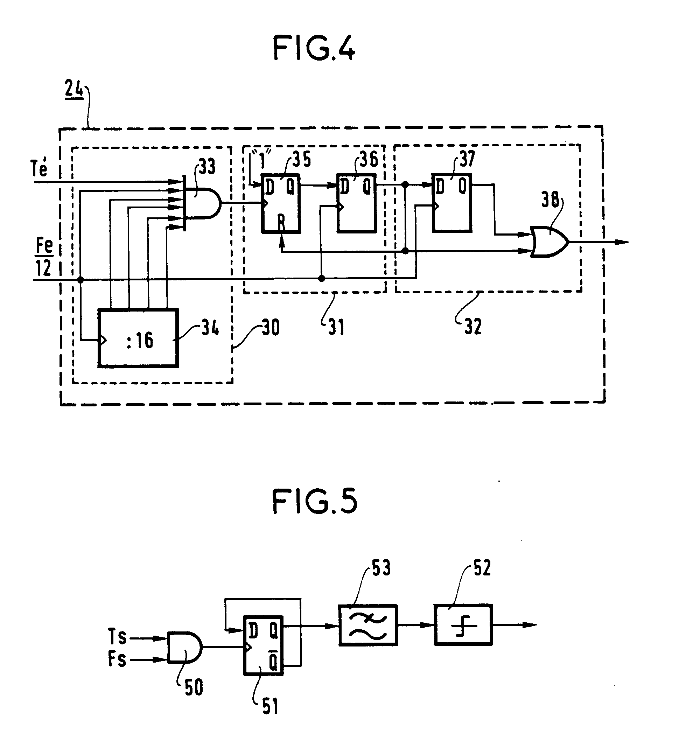

La figure 4 détaille le circuit de mise en forme 24 du circuit d'insertion des données binaires Té de la voie numérique de service dans le canal de parité. Celui-ci comporte en entrée un circuit d'échantillonnage 30 qui échantillonne les données binaires Té tous les seize mots de code sur la durée d'un demi-mot de code, suivi d'un circuit de calibrage et de resynchronisation d'impulsions 31 qui transforme chaque échantillon au niveau logique 1 en une impulsion coïncidant en durée avec un mot de code, et d'un circuit doubleur de durée 32 donnant aux impulsions la durée de deux mots de code.

Le circuit d'échantillonnage 30 comporte en entrée une porte logique de type "et" 33 à six entrées qui reçoit sur l'une d'elles les données binaires Té et sur les autres le signal d'horloge à la fréquence Fe/12, issu de la base de temps 11, rythmant l'apparition des blocs de 12 bits en sortie du multiplexeur 10 ou des mots de code en sortie du démultiplexeur 22, et les signaux de sortie des différents étages d'un compteur diviseur par seize 34 incrémenté par le même signal d'horloge Fe/12.

Le circuit de calibrage et de resynchronisation d'impulsions 31 comporte deux étages de registres tampon de type D 35, 36. Le premier étage de registre tampon 35 a son entrée d'horloge connectée à la sortie de la porte logique 33, son entrée D mise au niveau logique 1 et son entrée de remise à zéro connectée à sa sortie Q par l'intermédiaire du deuxième étage de registre tampon 36 qui lui est relié par son entrée D et qui est cadencé par le signal d'horloge Fe/12. Le premier étage de registre 35 repasse à l'état zéro à la fin de chaque mot de code s'il n'y était pas déjà tandis que le deuxième recopie l'état du premier en fin de mot de code sur la durée du mot de code suivant.

Le circuit doubleur de durée 32 comporte un étage de registre de type D 37 connecté par son entrée D à la sortie Q du deuxième registre tampon 36 du circuit de calibrage et de resynchronisation d'impulsions 31 et cadencé par le signal d'horloge Fe/12, et une porte logique de type "ou" 38 à deux entrées connectées à l'entrée D et à la sortie Q de l'étage de registre de type D 37. Toute impulsion durant un mot de code engendrée par le circuit de calibrage et de resynchronisation 31 est transmise par la porte logique 38 et prolongée sur le mot de code suivant par mise en mémoire dans le registre de type D 37.

En présence d'une donnée binaire à l'état logique 0 de la voie numérique de service, le circuit d'échantillonnage 30 n'engendre aucune impulsion à destination du circuit de calibrage et de resynchronisation 31. Le circuit doubleur 32 maintient sa sortie à l'état logique 0 et commande au modulateur 25 de délivrer une valeur modifiée p′ du bit de parité égale à la valeur réelle p du bit de parité. Tout se passe comme si le circuit d'insertion de données binaires Té de voie numérique de service n'existait pas et les mots de code disponibles en sortie du codeur dans le train de données binaires Ts sont tous de parité paire.

Une donnée d'état logique 1 se prolonge dans la voie numérique de service sur une durée de seize mots de code consécutifs. Elle provoque sur la durée d'émission des seize mots de code consécutifs corespondant à son apparition, l'émission par le circuit d'échantillonnage 30 d'une impulsion de durée voisine de celle de la moitié d'un mot de code. Cette impulsion est traitée par le circuit de calibrage et de resynchronisation 31 et par le circuit doubleur 32 pour coïncider avec la durée d'émission de deux de seize mots de code et pour entraîner par l'intermédiaire du modulateur 25 la complémentation du bit de parité correspondant à ces deux mots de code. De la sorte, sur les seize mots de code émis par le codeur dans le train de données binaires Ts pendant l'apparition d'une donnée à l'état logique 1 sur la voie numérique de service, deux mots de code consécutifs sont émis avec une parité impaire anormale violant la loi de parité et les quatorze autres avec une parité paire normale.

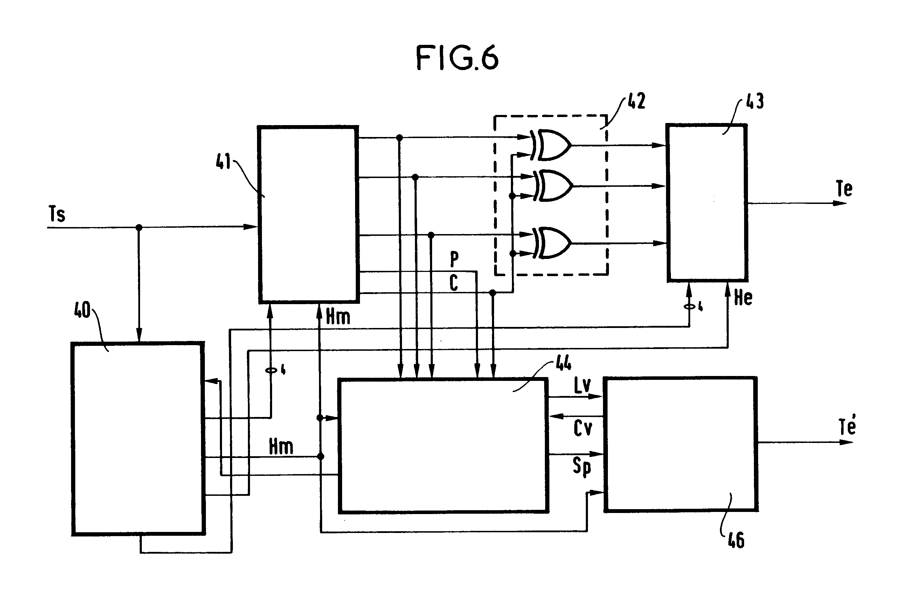

La figure 5 détaille un circuit de détection analogique d'erreurs en ligne sensible aux viols de la loi de parité. Celui-ci comporte une porte logique de type "et" à deux entrées 50 recevant le train numérique en ligne Ts résultant du codage 12B1C1P précédent et le signal d'horloge ligne Fs suivi d'un circuit bistable 51 dont la sortie est connectée à un comparateur de niveau à seuil 52 par l'intermédiaire d'un filtre passe-bas 53.

A chaque données binaires apparaissant dans le train Ts, au niveau logique 1, la porte de type "et" 50 engendre une impulsion qui est resynchronisée sur l'intervalle de temps élémentaire et utilisée pour faire changer d'état le circuit bistable 51.

Les mots de code étant tous pairs en l'absence de viols de la loi de parité, le circuit bistable 51 se retrouve toujours dans le même état de sortie après le passage du bit de parité de chaque mot de code alors qu'il n'a pas d'état préférentiel de sortie dans toutes les autres positions de mots de code. Sur un grand nombre d'intervalles de temps élémentaires, l'état de sortie pris par le circuit bistable 51 aux passages des bits de parité est majoritaire et influence par sa valeur 0 ou 1 le niveau de la composante continue du signal de sortie de ce circuit bistable 52.

Le filtre passe-bas 53 extrait la composante continue du signal de sortie du circuit bistable 51 tandis que le comparateur de niveau à seuil 52 compare le niveau de cette composante à un seuil intermédiaire entre les deux niveaux pris par la composante du signal de sortie du circuit bistable 51 selon que sa sortie est au niveau logique 0 ou 1 aux passages des bits de parité.

En cas d'un viol isolé de la loi de parité, le circuit bistable 51 change d'état de sortie aux passages des bits de parité ce qui entraîne, à la longue, un changement de niveau dans la composante continue de son signal de sortie qui est détecté par le comparateur à seuil 52.

En cas de deux viols consécutifs de la loi de parité, le circuit bistable 51 change deux fois d'état de sortie aux passages des deux fausses valeurs du bit de parité si bien qu'il se trouve aux passages des bits de parité ultérieurs dans le même état de sortie qu'aux passages des bits de parité antérieurs aux viols et que le niveau de la composante continue de son signal de sortie n'a pas le temps d'évoluer suffisamment pour qu'un changement soit perçu par le comparateur à seuil 52.

D'une façon plus générale, on voit que ce circuit de détection analogique est sensible aux erreurs en ligne entraînant des viols de la loi de parité isolés ou en nombre impair mais qu'il n'est pas sensible aux erreurs entraînant des paires isolées de viols consécutifs de la loi de codage.

La transmission d'une donnée binaire à l'état logique 1 de la voie numérique de service dans le canal de parité du train numérique Ts entraîne des viols de la loi de parité sur deux mots de code consécutifs sur seize qui ne sont pas perçus le circuit de détection analogique. Ces paires de viols consécutifs diminuent au plus, dans le cas le plus défavorable (toutes les données binaires du train numérique Té à bas débit au niveau logique 1), de 1/8 ème le pourcentage des états majoritaires dans le signal de sortie du circuit bistable ce qui est parfaitement tolérable avec les marges de seuil actuellement admises.

La figure 6 est un schéma, en blocs fonctionnels, d'un décodeur 12B1P1C qui permet de récupérer le train de données binaires initial Te à haut débit à partir du train numérique transmis Ts et qui est associé à un circuit d'extraction de voie de service en dehors de canal de parité délivrant le train de données binaires Té à bas débit.

Le décodeur présente en entrée, une base de temps 40 récupérant les intervalles de temps élémentaires du train de données binaires entrant Ts et engendrant différents signaux de cadencement dont un signal impulsionnel d'horloge mot Hm synchronisé sur la découpe en mots de 14 bits utilisée au codage et un signal impulsionnel d'horloge bit He donnant le rythme du train de données binaires décodé Te à grand débit, et un démultiplexeur 41 qui est adressé par la base de temps 40 et synchronisé par le signal d'horloge mot Hm de cette dernière, et qui transforme le train de données binaires entrant Ts en mots successifs de 14 bits parallèles selon une découpe identique à celle utilisée au codage. Le démultiplexeur 41 est suivi d'un circuit inverseur 42 qui complémente ou non la partie de chaque mot correspondant au bloc de 12 bits utilisé au codage en fonction de la valeur du bit d'inversion C repéré par sa position dans un mot, et d'un multiplexeur 43 qui est adressé par la base de temps 40 et synchronisé par le signal d'horloge bit He de cette dernière, et qui transforme les blocs successifs de 12 bits parallèles délivrés par le circuit inverseur 42 en un train de données binaires synchrones décodées Te. Un circuit de récupération de cadence mot 44 complète le décodeur. Associé à un circuit d'extraction de voie de service 46 en dehors du canal de parité délivrant le train de données binaires Té à bas débit, il agit sur la base de temps 40 par vol de cycle et opère par contrôle de la parité des mots de 14 bits délivrés par le démultiplexeur 41 en négligeant les viols de parité qui lui sont signalés par le circuit d'extraction de voie de service 46 comme étant dus à la transmission du train de données binaires Té à bas débit.

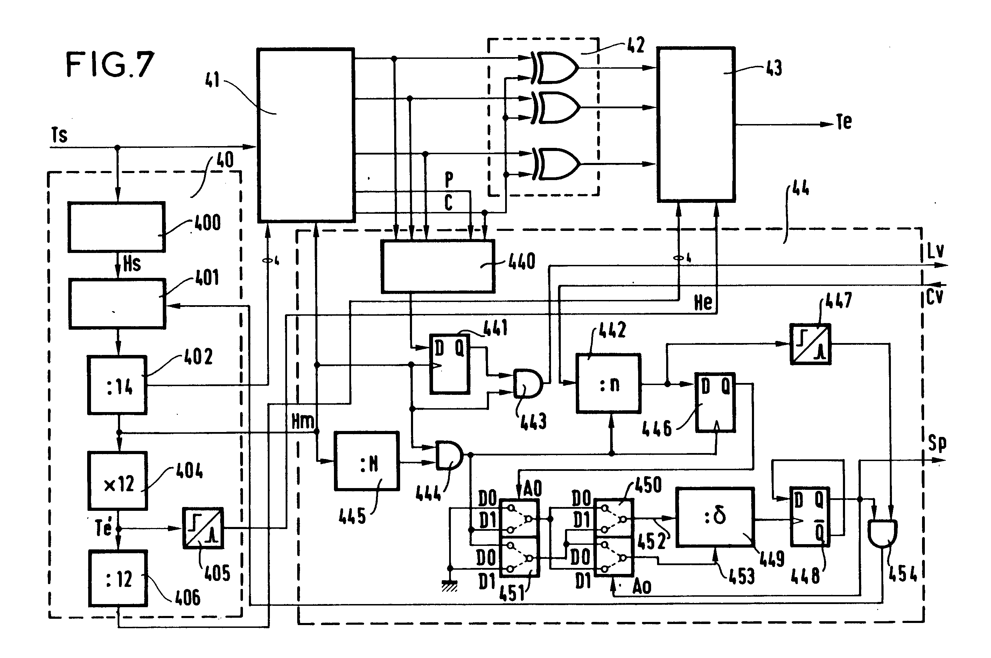

La base de temps 40 et le circuit de récupération de cadence mot 44 sont davantage détaillés à la figure 7. Celle-ci comporte en entrée, un oscillateur 400 qui est asservi en phase sur les transitions du train de données binaires entrant Ts et délivre un signal d'horloge Hs ayant une fréquence correspondant au débit du train de données binaires incident Ts. Cet oscillateur 400 est suivi d'un circuit de vol de cycle 401 et d'un diviseur par quatorze 402 qui d'une part commande l'adressage du démultiplexeur 41 et d'autre part délivre un signal d'horloge mot Hm, rectangulaire symétrique dont la fréquence correspond à la cadence de succession des mots de 14 bits utilisés au codage et dont les fronts montants rythment les changements de mots en sortie du démultiplexeur 41. Un multiplicateur de fréquence par douze 404 placé à la suite du diviseur par quatorze 402 engendre un signal dont la fréquence Fe correspond au débit du train de données binaires décodées Te et dont les fronts montants sont convertis en impulsions d'horloge bit He par un générateur d'impulsions 405. Un diviseur par douze 406, placé à la suite du multiplicateur 404, fournit la commande d'adressage du multiplexeur 43.

Le circuit de vol de cycle 401 permet d'occulter à la demande un cycle de l'oscillateur 400, c'est par exemple une porte logique de type "et", et ainsi de retarder les impulsions d'horloge mot Hm de la durée d'une donnée reçue. Cela permet de modifier les emplacements relatifs des données dans le découpage en mots de 14 bits jusqu'à l'obtention du bon découpage.

Le circuit de récupération de la synchronisation mot 44 comporte, un circuit de détection des viols de la loi de parité constitué d'un circuit de calcul de parité 440 recevant les quatorze bits parallèles de la sortie du démultiplexeur 41, un circuit de quantification d'erreurs et un circuit de commande de resynchronisation.

Le circuit de calcul de parité 440 n'est pas détaillé, car il est de conception classique. Réalisé par exemple à l'aide d'une cascade de portes logiques de type "ou exclusif", il délivre un signal binaire au niveau logique 0 en cas de mots de 14 bits de parité paire et au niveau logique 1 dans le cas inverse. Il est suivi d'un circuit de lecture échantillonnée formé d'une bascule de type D 441 et d'une porte logique de type "et" 443. La bascule de type D 441 est rythmée par le signal d'horloge mot Hm et connectée par son entrée D à la sortie du calcul de parité 440. La porte logique de type "et" 443 a ses deux entrées attaquées par le signal d'horloge mot Hm et par le signal de la sortie Q de la bascule 441. Elle engendre une impulsion de détection de viol de parité Lv de largeur calibrée coïncidant avec une impulsion du signal d'horloge Hm à chaque mot de code de 14 bits pour lequel le circuit de calcul de parité 440 trouve une parité impaire. Cette impulsion est destinée au circuit d'extraction de voie de service 46 qui sera décrit ultérieurement.

Le circuit de quantification d'erreurs reçoit du circuit d'extraction de voie de service 46 un signal impulsionnel de comptage d'erreurs de parité Cv et réagit lorsque le nombre d'erreurs de parité dépasse un nombre entier n prédéterminé pour N mots consécutifs de 14 bits délivrés par le démultiplexeur 42. Il comporte en entrée un décompteur par n prépositionnable 442 recevant sur son entrée de décomptage les impulsions de comptage d'erreurs de parité Cv et, sur une entrée de propositionnement à n, une impulsion d'horloge mot Hm sélectionnée tous les N mots dans le signal d'horloge mot Hm par l'intermédiaire d'une porte logique de type "et" 444 à deux entrées commandées par le signal d'horloge mot Hm et par le signal de sortie d'un diviseur par N 445 fonctionnant à partir du signal d'horloge mot Hm. Ce décompteur par n 442 délivre en sortie un signal binaire normalement au niveau logique 0 passant au niveau logique 1 dès que le décompte atteint la valeur nulle. Il est suivi d'un bascule de type D446 qui mémorise son état de sortie avant chacun de ses prépositionnements et d'un générateur d'impulsions 447 délivrant à chacun de ses passages par zéro une impulsion positive destinée à commander au circuit vol de cycle 401 de la base de temps 40, la non transmission d'un cycle de l'oscillateur 400 pour retarder de la durée d'un intervalle de temps du train incident Ts, le signal d'horloge mot Hm déterminant le découpage en mots de 14 bits.

Le circuit de commande de resynchronisation contrôle par l'intermédiaire d'une porte logique de type "et" 454 la transmission des impulsions du générateur d'impulsions 447 de manière à ne l'autoriser qu'en cas de perte de synchronisation, perte qui est admise lorsqu'il y a plus de n impulsions de comptage d'erreurs de parité Cv dans δ groupes consécutifs de N mots de 14 bits délivrés par le démultiplexeur 41. Il comporte une bascule de type D 448 montée en diviseur par deux engendrant sur sa sortie Q un signal binaire de perte de synchronisation Sp au niveau logique 1 en cas de perte de synchronisation et au niveau 0 dans le cas contraire qui est utilisé pour la commande de la porte logique de type "et" 454 et qui est également transmis au circuit d'extraction de voie de service 46. Cette bascule de type D 448 reçoit son signal d'horloge d'un décompteur par δ 449 prépositionnable ayant deux sélecteurs à deux étages 450, 451 placés devant ses entrées de décomptage 452 et de prépositionnement 453.

Le premier sélecteur 450 est monté en inverseur devant les entrées de décomptage 452 et de prépositionnement 453 du décompteur 449. Il est commandé par le signal de perte de synchronisation Sp disponible à la sortie Q de la bascule de type D 448. Le deuxième sélecteur 451 est monté en interrupteur permettant d'appliquer à l'un ou l'autre de ses étages, de manière exclusive, les impulsions d'horloge mot Hm sélectionnées tous les N mots par la porte logique de type "et" 444. Il est commandé par la sortie Q de la bascule de type D 446 mémorisant les passages par zéro du décompteur par n 442.

Le décompteur 449 engendre en sortie un niveau logique 0 qui passe au niveau logique 1 lorsque son décompte atteint la valeur nulle, cette transition entraînant le changement d'état de la bascule de type D 448 engendrant le signal de perte de synchonisation Sp.

Un niveau logique 0 de ce signal de perte de synchronisation Sp traduit un verrouillage de la synchronisation mot, bloque la porte logique 454 pour empêcher tout vol de cycle dans la base de temps 40 et adresse le premier sélecteur 450 de manière à aiguiller, en coopération avec le deuxième sélecteur 451, les impulsions d'horloge mot Hm délivrées tous les N mots consécutifs par la porte logique 444 soit vers l'entrée de décomptage 452 si elles correspondent à des groupes de N mots pour lesquels il a été décompté plus de n impulsions de comptage d'erreur de parité Cv dans chacun d'eux, soit vers l'entrée de prépositionnement à δ 453 si elles correspondent à des groupes de N mots dont aucun n'a donné lieu a plus de n impulsions de comptage d'erreurs de parité Cv.

Un niveau logique 1 du signal de perte de synchronisation Sp traduit un processus d'acquisition de la synchronisation mot à la suite d'une perte de verrouillage, débloque la porte logique 454 pour autoriser les vols de cycle dans la base de temps 40 et commande l'adressage du premier sélecteur 450 de manière à aiguiller, en coopération avec le deuxième sélecteur 451, les impulsions d'horloge mot Hm délivrées tous les N mots consécutifs par la porte logique 444 soit vers l'entrée de décomptage 452 si elles correspondent à des groupes de N mots dont aucun n'a donné lieu à plus de n impulsions de comptage d'erreurs de parité Cv, soit vers l'entrée de prépositionnement à δ453 si elles correspondent à des groupes de N mots pour lesquels il a été décompté plus de n impulsions de comptage d'erreurs de parité Cv.

Le choix des entiers n, N, δ se fait de manière à optimiser des paramètres tels que l'invulnérabilité aux erreurs en ligne (intervalle entre fausses déclarations de perte de synchronisation mot dues aux erreurs en ligne), probabilité de fausse récupération de synchronisation mot, temps de reprise de synchronisation mot.

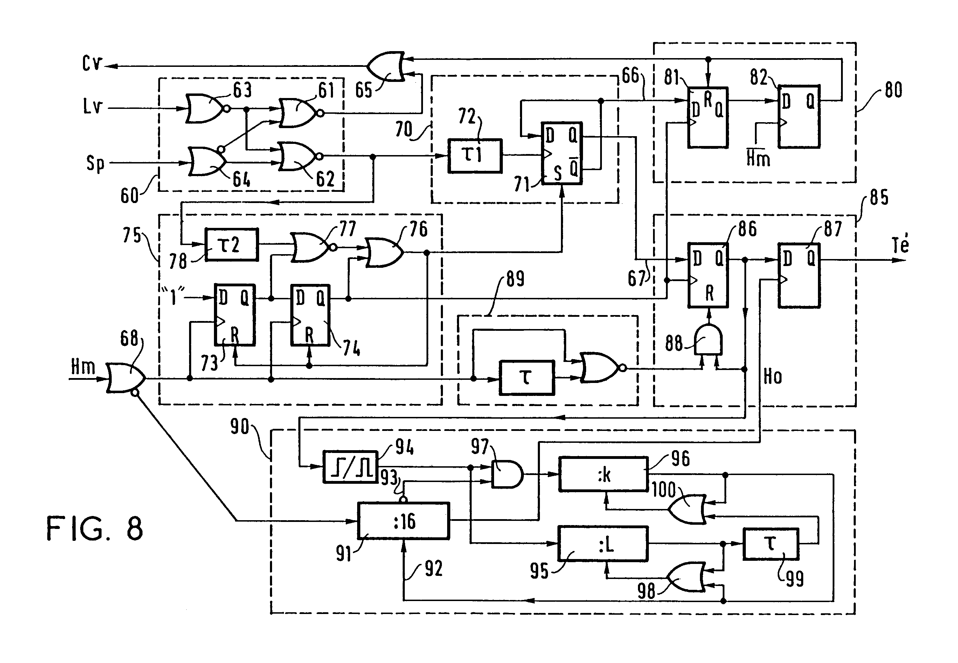

La figure 8 détaille le circuit d'extraction de voie de service 46. Celui-ci présente en entrée un circuit d'aiguillage 60 qui oriente, selon qu'il y a perte ou verrouillage de la synchronisation mot du décodeur, les impulsions de détection de viols de parité Lv, soit directement en sortie sur une porte logique de type "ou" 65 que les retourne au circuit de synchronisation mot 44 sous forme d'impulsions de comptage d'erreurs de parité Cv, soit vers un discriminateur reconnaissant les impulsions de détection de viols de parité Lv correspondant à des viols de parité provoqués par la transmission du train de données Té à bas débit de la voie de service. Le discriminateur est formé d'un compteur modulo deux 70 associé à un circuit de limitation de fenêtre de comptage 75 et possède une première sortie 66 de signalisation de détection de viols de parité sur des mots de code isolés et une deuxième sortie 67 de signalisation de détection de viols de parité sur deux mots de code consécutifs. La première sortie 66 du discriminateur mène à un circuit régénérateur 80 qui transforme à destination de la porte logique type "ou" 65, toute signalisation de détection de viol de parité sur un mot de code isolé en une impulsion de comptage d'erreurs de parité tandis que la deuxième sortie 67 du discriminateur mène à un circuit de lecture de voie de service 85 rythmé par un circuit de resynchronisation de voie de service 90 qui interprète les signalisations de détection de viols de parité sur deux mots de code consécutifs comme des données au niveau logique 1 du train Té à bas débit.

Le circuit d'aiguillage 60 comporte deux portes logiques de type "non ou" 61, 62 à deux entrées qui reçoivent les impulsions de détection de viols de parité Lv complémentées par une porte inverseuse 63 et qui sont commandées en opposition à l'aide d'une porte 64 à deux sorties inverseuse et non inverseuse attaquée par le signal de perte de synchronisation Sp.

En cas de perte de synchronisation mot les impulsions de détection de viols de parité Lv sont retournées vers la sortie en tant qu'impulsions de comptage d'erreurs de parité Cv en raison du niveau logique 1 du signal de perte de synchronisation Sp, qui bloque la porte logique 62 et débloque par sa version complémentée la porte logique 61.

Tous les viols de parité sont alors considérés comme des erreurs et retournés au circuit de récupération de synchronisation mot 44 pour servir à la resynchronisation.

En cas de verrouillage de la synchronisation mot, les impulsions de détection de viols de parité Lv sont appliquées à la fois au compteur modulo deux 70 et au circuit de limitation de fenêtre de comptage 75 du discriminateur, le bouclage direct vers la sortie étant coupé en raison du niveau logique 0 du signal de perte de synchronisation Sp qui débloque la porte logique 62 et bloque par sa version complémentée la porte logique 61.

Le compteur modulo deux 70 se compose d'une bascule de type D 71 montée en diviseur par deux avec une commande de mise à un contrôlée par le circuit de limitation de fenêtre de comptage 75 et avec une entrée d'horloge reliée à la sortie de la porte logique 62 du circuit d'aiguillage 60 par l'intermédiaire d'un circuit 72 apportant un retard τ 1.

Le circuit de limitation de fenêtre de comptage 75 comporte deux bascules de type D 73, 74 connectées à la manière des étages d'un registre à décalage, la première ayant son entrée D portée au niveau logique 1, cadencées par le signal d'horloge mot Hm fourni par une porte 68 à deux sorties inverseuse et non inverseuse, et remises à zéro par l'intermédiaire d'une porte logique de type "ou" 76 à deux entrées dont l'une est connectée à la sortie de la deuxième bascule de type D 74 et l'autre à la sortie d'une porte logique de type "non ou" 77 à deux entrées connectées l'une directement à la sortie Q de la première bascule de type D73 et l'autre, par l'intermédiaire d'un circuit 78 introduisant un retard τ2, à la sortie de la porte logique 62 du circuit d'aiguillage 60.

La première bascule 73 mémorise l'état déclenché ou au repos du circuit de limitation de fenêtre de comptage 75 tandis que la deuxième 74 signale la fin d'une fenêtre de comptage par une impulsion sur sa sortie Q. Le montage des portes logiques 76, 77 qui commande la remise à zéro des bascules 73, 74, contrôle également la remise à un de la bascule 71 du compteur modulo deux 70. Il permet soit de maintenir au repos le circuit de limitation de fenêtre de comptage 75 et le compteur modulo deux 70 lorsqu'ils sont déjà au repos et qu'il n'apparaît pas d'impulsion de détection de viol de parité en sortie de la porte logique 62 du circuit d'aiguillage 60 soit de les refaire passer au repos en fin de fenêtre de comptage. Le circuit à retard 78 garantit, en cas d'apparition d'une impulsion de détection de viol de parité déclenchant le circuit de limitation de fenêtre 75 et le compteur modulo deux 70, que cette dernière se prolonge au niveau de la porte logique 77 un temps suffisant pour qu'apparaisse un front de signal d'horloge Hm déclenchant le passage à l'état logique 1 de la sortie Q de la première bascule 73. Le retard $\tau2$ qu'il apporte est inférieur à celui $\tau1$ apporté par le circuit à retard 72 afin qu'une impulsion de détection de viol de parité ayant déclenché le circuit de limitation de fenêtre de comptage 75 et la libération de la bascule 71 du compteur modulo deux 70 entraîne également un changement d'état de cette dernière.

En l'absence d'impulsion de détection de viol de parité sur la sortie de la porte logique 62 du circuit d'aiguillage 60 sur une durée supérieure à celle d'un mot de code, le circuit de limitation de fenêtre de comptage 75 retombe au repos s'il n'y était pas déjà et bloque le compteur modulo deux 70 à l'état logique 1.

A l'apparition d'une impulsion de détection de viol de parité sur la sortie de la porte logique 62 du circuit d'aiguillage 60, le circuit de limitation de fenêtre 75 qui était au repos se déclenche, libère le compteur modulo deux 70 dont la sortie passe au niveau logique 0, reste déclenché sur la durée du mot de code suivant puis engendre une impulsion de fin de fenêtre de comptage avant de repasser au repos et de bloquer à nouveau le compteur modulo 70 à l'état logique 1.

Pendant le temps de déclenchement du circuit de limitation de fenêtre de comptage 75, le compteur modulo deux 70 qui est passé au niveau logique 0 reste à ce niveau si une deuxième impulsion de détection de viol de parité intervenant sur la durée du mot de code suivant la première ne vient pas le remettre prématurément au niveau logique 1.

Le circuit de régénération d'impulsions 80 comporte une première bascule de type D 81 dont l'entrée D est connectée à la sortie $\overline{Q}$ de la bascule 71 du compteur modulo deux 70 et l'entrée d'horloge à la sortie Q de la deuxième bascule 74 du circuit de limitation de fenêtre de comptage 75, et une deuxième bascule 82 dont l'entrée D est connectée à la sortie Q de la première bascule 81 et l'entrée d'horloge à la sortie inversée de la porte 68 délivrant le signal d'horloge mot complémenté $\overline{Hm}$. La sortie Q de cette deuxième bascule 82 est connectée à une entrée de la porte logique de type "ou" 65 et contrôle une entrée de remise à zéro de la première 81.

La première bascule 81 échantillonne l'état de sortie du compteur modulo deux 70 en fin de chaque fenêtre de comptage repérée par l'impulsion de sortie de la bascule 74, avec un léger retard sur le front de montée du signal d'horloge mot Hm du au délai de transition de la bascule 74. Sa sortie Q passe au niveau logique 1 chaque fois que le compteur modulo deux 70 est à l'état logique 0 en fin de fenêtre de comptage et signale, par la même, une impulsion de détection de viol de parité sur un mot de code isolé qui ne peut correspondre qu'à une erreur de transmission. La deuxième bascule 82 échantillonne l'état de la sortie Q de la première bascule 81 dans la deuxième partie des périodes de chaque mot de code. Lorsqu'elle trouve un état logique 1 en sortie de la première bascule 81, elle remet cette dernière à zéro et engendre à destination du circuit de récupération de la synchronisation mot 44, une impulsion de comptage d'erreur de parité Cv calibrée à la largeur d'une impulsion de synchronisation mot Hm.

Le circuit de lecture de voie de service 85 comporte une première bascule de type D 86 connectée par son entrée D à la sortie Q de la bascule 71 du compteur modulo deux 70 et par son entrée d'horloge à la sortie Q de la deuxième bascule 74 du circuit de limitation de fenêtre de comptage 75, une deuxième bascule de type D 87 connectée en entrée D à la sortie Q de la première bascule 86 et en entrée d'horloge à la sortie du circuit de resynchronisation de voie de service 90, et une porte logique de type "et" 88 à deux entrées qui contrôle une entrée de remise à zéro de la première bascule 86 et dont les entrées sont connectées l'une à la sortie Q de la première bascule 86 et l'autre à un circuit recalibreur 89 allongeant les impulsions du signal d'horloge mot Hm avant de les complémenter.

La première bascule 86 échantillonne l'état de sortie du compteur modulo deux 70 en fin de chaque fenêtre de comptage repérée par l'impulsion de sortie de la bascule 74 avec un léger retard sur le front de montée du signal d'horloge mot Hm dû au délai de transition de la bascule 74. Sa sortie Q passe au niveau logique 1 chaque fois que le compteur modulo deux 70 est au niveau logique 1 en fin de fenêtre de comptage et signale, par là-même des impulsions de détection de viols de parité sur deux mots de code consécutifs qui sont à interpréter comme résultant de la transmission d'une donnée au niveau logique 1 du train de données binaires Té à bas débit de la voie de service. Cette première bascule 86 est remise à zéro par l'intermédiaire de la porte logique 88 et du circuit recalibreur 89 sur la fin des périodes du signal d'horloge mot Hm où sa sortie Q est passée au niveau logique 1.

La deuxième bascule 87 délivre le train de données binaires Té à bas débit en échantillonnant l'état de la sortie Q de la première bascule 86 au cours des mots de code où peuvent apparaître les transitions positives de cette dernière, à une cadence égale au seizième de celle du signal d'horloge mot Hm grâce à un signal d'horloge récupéré Ho du train de données à bas débit Té délivré par le circuit de resynchronisation de voie de service 90.

Le circuit de resynchronisation de voie de service 90 comporte un compteur diviseur par seize 91 qui fournit le signal d'horloge récupéré Ho et qui est attaqué par la version complémentée du signal d'horloge mot Hm disponible à la sortie complémentée de la porte 68 de manière à faire fonctionner la deuxième bascule 87 dans la deuxième partie des périodes des mots de code, après les transitions positives éventuelles de la première bascule 86. Ce compteur diviseur par seize 91 présente une entrée de remise à quinze 92 et une sortie de signalisation de l'état quinze 93 auxquels est connectée une boucle de synchronisation asservissant son passage par l'état quinze à coïncider avec la position, sur un intervalle de seize mots de code, des transitions positives de la première bascule 86 du circuit de lecture de voie de service 80. Cette boucle de synchronisation compte les transitions positives de la première bascule 86 et provoque la remise à quinze du compteur diviseur par seize 91 sur une de ces transitions dès que plus de k transitions comptées parmi L apparaîssent en dehors de l'état quinze du compteur diviseur par seize 91. Elle comporte pour ce faire un détecteur de transitions positives 94 qui est connecté en sortie Q de la première bascule 86 du circuit de lecture de voie de service 85 et délivre des impulsions de comptage à chaque passage de cette sortie de l'état logique 0 à l'état logique 1, un compteur par L 95 et un compteur par k 96 cadencés par le détecteur de transitions positives 94 l'un 95 directement et l'autre 96 par l'intermédiaire d'une porte logique 97 de type "et" bloquant les impulsions parvenant pendant l'état quinze du compteur diviseur par seize 91. Le compteur par L 95 a sa sortie de dépassement reliée à sa propre entrée de remise à zéro par l'intermédiaire d'une porte logique de type "ou" 98 et à l'entrée de remise à zéro du compteur par k 96 par l'intermédiaire d'un circuit à retard 99 et d'une porte logique de type "ou" 100. Le compteur par k 96 a sa sortie de dépassement reliée à sa propre entrée de remise à zéro par l'intermédiaire de la porte logique de type "ou" 100, à celle de remise à zéro du compteur par L 95 par l'intermédiaire de la porte logique de type "ou" 98, et à l'entrée de remise à quinze du compteur diviseur par seize 91.

En cas de perte de synchronisation, le compteur par k 96 de moindre capacité que le compteur par L 95 reçoit la plupart des impulsions du détecteur de transitions 94 et déborde avant le compteur par L 95 entraînant à l'occasion de l'une de ces impulsions la remise à quinze du compteur diviseur par seize 91 pour qu'il passe à zéro sur la même période de mot de code et déclenche la bascule 87, sa propre remise à zéro et celle du compteur par L 95.

En cas de verrouillage de synchronisation, le compteur par k 96 reçoit peu ou pas d'impulsions du détecteur de transitions 94 si bien que le compteur par L 95 déborde avant lui et le remet à zéro avant qu'il n'ait pu commander une remise à quinze du compteur diviseur par seize 91.

Le mode de réalisation qui vient d'être décrit se situe dans le cadre d'un train numérique à haut débit transmis en code MB1C1P mais il est bien évident que l'invention s'applique à des trains numériques à haut débit transmis en d'autres codes à contrôle de parité tels que par exemple le code MB1P selon lequel tous les M bits de données est introduit un bit de parité ou bien encore des codes à alphabets dans lesquels un contrôle de parité à période variable est introduit par remplacement de mots de l'alphabet par d'autres mots normalement pas utilisés, ce remplacement s'effectuant ou non de manière à maintenir une parité donnée.

**Revendications**

1. Procédé de transmission d'une voie de service numérique par l'intermédiaire du canal de parité d'un train numérique transmis en code à contrôle de parité, avec des mots de parité intercalés à des instants spécifiques, au moyen de modifications de certains mots de parité violant la loi de parité du code à contrôle de parité caractérisé en ce que lesdites modifications sont effectuées sur des groupes espacés entre eux, de mots de parité consécutifs en nombres pairs.

2. Procédé selon la revendication 1, caractérisé en ce que les données du train numérique Té de la voie de service sont transmises dans le canal de parité du train numérique en code à contrôle de parité par des modifications de groupes de deux mots de parité consécutifs entraînant sur chaque groupe deux viols consécutifs de la loi de parité du code à contrôle de parité.

3. Procédé selon la revendication 1, appliqué à un train numérique Ts transmis en code à contrôle de parité du type MB1C1P dans lequel les données sont transmises par des mots de code successifs formés chacun d'un bloc de M bits de données complété par un bit de parité P et par un bit d'inversion C signalant si le bloc et son bit de parité ont été inversés pour maintenir la somme numérique courante SNC bornée, caractérisé en ce que les données du train numérique Té de la voie de service sont transmises par des complémentations de groupes espacés de deux bits de parité P appartenant à deux mots de code consécutifs, lesdites complémentations étant faites avant les inversions éventuelles des mots de code concernés.

4. Dispositif pour la mise en oeuvre du procédé selon la revendication 1 au niveau d'un codeur et d'un décodeur de code à contrôle de parité, ledit codeur comportant un circuit logique de calcul (15) déterminant les valeurs des mots de parité et un multiplexeur (22) dégageant dans le train codé Ts les fenêtres temporelles d'insertion des mots de parité et ledit décodeur comportant un circuit de détection des viols de la loi de parité du code à contrôle de parité (440, 441, 443), caractérisé en ce qu'il comporte :
   - des moyens d'insertion de données de voie numérique de service dans le canal de parité qui opèrent au niveau du codeur et comportent un circuit de mise en forme (24) échantillonnant les données de la voie numérique de service au rythme des groupes espacés de mots de parité consècutifs en nombres pains et délivrant des échantillons occupant la durée d'un groupe, et un circuit de modulation (25) qui est commandé par le circuit de mise en forme (24) et intercalé à la sortie du circuit logique de calcul (15) déterminant dans le codeur les valeurs des mots de parité et
   - des moyens d'extraction de voie numérique de service (46) qui opèrent au niveau du décodeur à partir du signal du circuit de détection des viols de la loi de parité (440, 441, 443) et déduisent les valeurs des données de la voie numérique de service, des viols de la loi de parité détectés sur un nombre pair de mots de parité consécutifs.

5. Dispositif pour la mise en oeuvre du procédé selon la revendication 3 au niveau d'un codeur et d'un décodeur de type MB1C1P, ledit codeur comportant un circuit logique de calcul (15) délivrant la valeur normale du bit de parité P à destination d'un circuit d'inversion (21) opérant sous le contrôle d'un circuit de commande d'inversion (19), et d'un multiplexeur (22) dégageant dans le train codé Ts les fenêtres d'insertion des bits d'inversion C et de parité P, ledit décodeur comportant un circuit de récupération de cadence mot (44) pourvu d'un circuit de détection des viols de la loi de parité (440, 441, 443), caractérisé en ce qu'il comporte :
   - des moyens d'insertion de données binaires de voie numérique de service dans le canal de parité qui opèrent au niveau du codeur et comportent un circuit de mise en forme (24) échantillonnant les données binaires de la voie numérique de service au rythme des groupes espacés de deux bits de parité appartenant à deux mots de code consécutifs et délivrant des échantillons occupant la durée d'un groupe c'est-à-dire de deux mots de code, et un circuit de modulation (25) qui est commandé par le circuit de mise en forme (24), intercalé à la sortie du circuit logique de calcul (15) délivrant la valeur normale du bit de parité et remplace cette dernière par une valeur modifiée $p'$, et
   - des moyens d'extraction de voie numérique de service (46) qui opèrent au niveau du décodeur à partir du signal du circuit de détection des viols de la loi de parité (440, 441, 443) et déduisent les valeurs des données de la voie numérique de service des viols de la loi de parité détectés sur deux bits de parité consécutifs.

6. Dispositif selon la revendication 4, caractérisé en ce que les moyens d'extraction de voie de service (46) comporte un discriminateur qui reconnaît la détection de viols de la loi de parité se succédant sur deux mots de parité consécutifs et qui comprend un compteur modulo deux (70) associé à un circuit de limitation de fenêtre de comptage (75) opérant l'un et l'autre à partir du signal délivré par le circuit de détection des viols de la loi de parité (440, 441, 443) appartenant au décodeur, le circuit de limitation de fenêtre de comptage (75) maintenant en dehors de ses périodes de déclenchement le compteur modulo deux (70) dans un état dit premier état et libérant le compteur modulo deux (70) sur une durée égale à celle séparant deux mots de parité consécutifs lorsqu'il est délenché par la détection d'un viol de parité, le compteur modulo deux (70) signalant les viols de la loi de parité sur deux mots de parité consécutifs par un retour prématuré à son premier état au cours d'un déclenchement du circuit de limitation de fenêtre de comptage (75).

**Claims**

1. A method of transmitting a digital service channel through the parity channel of a digital bit stream transmitted in a parity checking code having parity words inserted at specific times, the method consisting in modifying certain parity words thus violating the parity law of the parity checking code, characterized in that said modifications are applied to spaced groups of even numbers of consecutive parity words.

2. A method according to claim 1, characterized in that the data of the service channel digital bit stream Té is transmitted in the parity channel of the parity check digital bit stream by modifying groups of two consecutive parity words resulting in each group, in two consecutive violations of the parity checking code parity law.

3. A method according to claim 1 applied to a digital bit stream Ts transmitted in MB1C1P type parity checking code in which the data is transmitted by consecutive code words each formed of a block of M data bits completed by a parity bit P and by an inversion bit C indicating whether the block and its parity bit have been inverted in order to maintain the running digital sum SNC within limits, characterized in that the data of the service channel digital bit stream Té is transmitted by complementing spaced groups of two parity bits P belonging to two consecutive code words, said complementing being made before the possible inversion of the code words concerned.

4. A device for implementing the method according to claim 1 in a parity checking encoder and decoder, said encoder comprising a computation logic circuit (15) determining the values of the parity words, and a multiplexer (22) isolating in the encoded bit stream Ts temporal windows for the insertion of the parity words, and said decoder comprising a parity law violation detector circuit (440, 441, 443), characterized in that it comprises:
- means for inserting digital service channel data into the parity channel which operate at the level of the encoder and comprise a shaper circuit (24) sampling the digital service channel data at the timing rate of spaced groups of consecutive parity words of even numbers and delivering samples occupying the duration of a group, and a modulator circuit (25) which is controlled by the shaper circuit (24) and which is connected to the output of the computation logic circuit (15) determining in the encoder the values of the parity words, and

- digital service channel extraction means (46) which are operative at the level of the decoder on the signal from the parity law violation detector circuit (440, 441, 443) and deduce the digital service channel data values from parity law violations detected in an even number of consecutive parity words.

5. A device for implementing the method according to claim 3 in an encoder and a decoder of the MB1C1P type, said encoder comprising a computation logic circuit (15) delivering the normal value of the parity bit P to an inverter circuit (21) operating under the control of an inversion control circuit (19), and a multiplexer (22) isolating in the encoded bit stream Ts windows for inserting inversion bits C and parity bits p, and said decoder comprising a word timing recovery circuit (44) provided with a parity law violation detector circuit (440, 441, 443), characterized in that it comprises:
- means for inserting digital service channel binary data into the parity channel which are operative in the encoder and include a shaper circuit (24) sampling the digital service channel binary data at the timing rate of spaced groups of two parity bits belonging to two consecutive code words and delivering samples occupying the duration of a group, that is to say, two code words, and a modulator circuit (25) controlled by the shaper circuit (24), said modulator circuit being connected to the output of the computation logic circuit (15) which delivers the normal value of the parity bit, and replacing the latter by a modified value p', and
- digital service channel extraction means (46) which are operative in the decoder on the signal from the parity law isolation detector circuit (440, 441, 443) and deduce the digital service channel data values from parity law violations detected on two consecutive parity bits.

6. A device according to claim 4, characterized in that the service channel extraction means (46) include a discriminator which recognises detection of successive parity law violations on two consecutive parity words and which comprises a modulo 2 counter (70) associated with a count window limiter circuit (75) both operating on the signal delivered by the parity law violation detector circuit (440, 441, 443) forming part of the decoder, the count window limiter circuit (75) maintaining outside its triggering period the modulo 2 counter (70) in a first state and releasing the modulo 2 counter (70) over a duration equal to that between two consecutive parity words when it is triggered by the detection of a parity violation, the modulo 2 counter (70) indicating parity law violations on two consecutive parity words by a premature return to its first state during triggering of the count window limiter circuit (75).

**Patentansprüche**

1. Übertragungsverfahren für einen digitalen Dienstkanal über den Paritätskanal eines mit Paritätskode übertragenen digitalen Datenstroms, wobei Paritätswörter zu spezifischen Zeitpunkten eingefügt werden und die Übertragung durch Modifikationen bestimmter Paritätswörter erfolgt, die das Paritätsgesetz des Paritätskodes verletzen, dadurch gekennzeichnet, daß die Modifikationen an voneinander einen Abstand aufweisenden Gruppen von einer geraden Anzahl aufeinanderfolgender Paritätswörter ausgeführt werden.

2. Verfahren nach Anspruch 1, dadurch gekennzeichnet, daß die Daten des digitalen Datenstroms Té des Dienstkanals im Paritätskanal des mit Paritätskode übertragenen Datenstroms durch Modifikationen von Gruppen von zwei aufeinanderfolgenden Paritätswörtern übertragen werden, die für jede Gruppe zwei aufeinanderfolgende Verletzungen des Paritätsgesetzes des Paritätskodes zur Folge haben.

3. Verfahren nach Anspruch 1, angewandt auf einen digitalen Datenstrom Ts, der in einem Paritätskode vom Typ MB1C1P übertragen wird, bei dem die Daten durch aufeinanderfolgende Kodewörter übertragen werden, die je aus einem Datenblock von M Bits besteht, die durch ein Paritätsbit P und ein Inversionsbit C vervollständigt sind, welches anzeigt, ob der Block und sein Paritätsbit invertiert worden sind, um die laufenden digitale Summe SNC in Grenzen zu halten, dadurch gekennzeichnet, daß die Daten des digitalen Datenstroms Té des Dienstkanals durch voneinander einen Abstand aufweisende Komplementbildungen von zwei Paritätsbits P übertragen werden, die zwei aufeinanderfolgenden Kodewörtern angehören, wobei die Komplementbildung vor der eventuellen Inversion der betreffenden Kodewörter erfolgt.

4. Einrichtung zur Durchführung des Verfahrens nach Anspruch 1 bei einem Kodierer und einem Dekodierer des Paritätskodes, wobei der Kodierer eine logische Rechenschaltung (15) zur Bestimmung der Werte der Paritätswörter und einen Multiplexer (22) aufweist, der im kodierten Datenstrom Ts die Zeitfenster zum Einfügen der Paritätswörter ermittelt, während der Dekodierer eine Schaltung zur Erfassung der Verletzungen des Paritätsgesetzes des Paritätskodes (400, 441, 443) aufweist, dadurch gekennzeichnet, daß die Einrichtung folgende Mittel aufweist:

   - Mittel zum Einfügen von Daten des digitalen Dienstkanals in den Paritätskanal, wobei die Mittel in Höhe des Kodierers wirksam sind und eine Formgebungsschaltung (24), die die Daten des digitalen Dienstkanals im Takte der einen Abstand aufweisenden Gruppen von aufeinanderfolgenden geradzahligen Paritätswörtern abtastet und Tastproben liefert, welche die Dauer einer Gruppe besetzen, sowie eine Modulationsschaltung (25) aufweisen, die von der Formgebungsschaltung (24) gesteuert wird und mit dem Ausgang der logischen Rechenschaltung (15) verbunden ist, die im Kodierer die Werte der Paritätswörter bestimmt, und

   - Mittel zum Auskoppeln des digitalen Dienstkanals (46), die in Höhe der Dekodierstufe auf der Basis des von der Schaltung zur Erkennung der Verletzungen des Paritätsgesetzes (440, 441, 443) kommenden Signals wirksam sind und aus den bei einer geraden Anzahl aufeinanderfolgender Paritätswörter erkannten Verletzungen des Paritätsgesetzes die Werte der Daten des digitalen Dienstkanals ableiten.

5. Einrichtung zur Durchführung des Verfahrens nach Anspruch 3 mit einem Kodierer und einem Dekodierer vom Typ MB1C1P, wobei der Kodierer eine logische Rechenschaltung (15), die den Normalwert des Paritätsbits P für eine Inversionsschaltung (21) liefert, welche unter der Kontrolle einer Inversionsbefehlsschaltung (19) arbeitet, und einen Multiplexer (22) aufweist, der im kodierten Datenstrom Ts die Zeitfenster zum Einfügen der Inversionsbits C und des Paritätsbits P vorgibt, während der Dekodierer eine Worttaktwiedergewinnungsschaltung (44) aufweist, die mit einer Schaltung zur Erkennung der Verletzungen des Paritätsgesetzes (440, 441, 443) ausgestattet ist, dadurch gekennzeichnet, daß die Einrichtung aufweist:

   - Mittel zum Einfügen von Binärdaten des digitalen Dienstkanals in den Paritätskanal, wobei die Mittel in Höhe der Kodierstufe wirksam sind und eine Formgebungsschaltung (24) aufweisen, welche die Binärdaten des digitalen Dienstkanals im Takt der Datengruppen abtastet, die einen gegenseitigen Abstand von zwei Paritätsbits zweier aufeinanderfolgender Kodewörter besitzen, und welche Tastproben liefert, die die Dauer einer Gruppe, d.h. zweier Kodewörter, besetzen, und wobei die Mittel eine Modulationsschaltung (25) aufweisen, die von der Formgebungsschaltung (24) gesteuert wird und mit dem den Normalwert des Paritätsbits liefernden Ausgang der logischen Rechenschaltung (15) verbunden ist und den Normalwert durch einen modifizierten Wert p' ersetzt, und

- Mittel zum Auskoppeln des digitalen Dienstkanals (46), die in Höhe der Dekodierstufe auf der Basis des Signals der Schaltung (440, 441, 443) zur Erkennung der Verletzungen des Paritätsgesetzes wirksam sind und aus den bei zwei aufeinanderfolgenden Paritätsbits erfaßten Verletzungen des Paritätsgesetzes die Werte der Daten des digitalen Dienstkanals ableiten.

6. Einrichtung nach Anspruch 4, dadurch gekennzeichnet, daß die Mittel (46) zur Auskopplung des Dienstkanals einen Diskriminator aufweisen, der die Verletzungen des Paritätsgesetzes, welche nacheinander bei zwei aufeinanderfolgenden Paritätswörtern auftreten, erkennt, und der einen Modulo-2-Zähler (70) aufweist, der mit einer Zählfensterbegrenzungsschaltung (75) verbunden ist, wobei beide Komponenten auf der Basis des von der Schaltung (440, 441, 443) zur Erkennung der Verletzungen des Paritätsgesetzes gelieferten Signals arbeiten, die dem Dekodierer angehört, wobei die Zählfensterbegrenzungsschaltung (75) außerhalb ihrer Triggerperioden den Modulo-2-Zähler (70) in einem sogenannten ersten Zustand festhält, aber den Modulo-2-Zähler (70) während einer zwei aufeinanderfolgende Paritätswörter trennenden Dauer freigibt, wenn sie durch die Erkennung einer Paritätsverletzung ausgelöst wird, und wobei der Modulo-2-Zähler (70) die bei zwei aufeinanderfolgenden Paritätswörtern auftretenden Verletzungen des Paritätsgesetzes durch eine vorzeitige Rückkehr in seinen ersten Zustand im Verlaufe einer Auslösung der Zählfensterbegrenzungsschaltung (75) anzeigt.

# FIG.1

# FIG.2

# FIG.3

S01
S02
S03
S04

162
163
164
165

160
161

Σ

ci

D Q
D Q
D Q
D Q

16

Fe
12

191
19
190

P'
21

1
12
13

EP 0 320 843 B1

# FIG.4

# FIG.5

18

# FIG.6

EP 0 320 843 B1

# FIG.7

EP 0 320 843 B1

FIG. 8

EP 0 320 843 B1